# FASCICULE DE BREVET EUROPEEN

(11) **EP 2 507 337 B1**
(45) Date de publication et mention de la délivrance du brevet: **09.03.2016**
(21) Numéro de dépôt: 10803593.2
(22) Date de dépôt: 30.11.2010
(51) Int. Cl.: C09K 5/10, C01F 7/02, G21C 15/28

(54) **DISPERSION COLLOÏDALE D'OXYDE D'ALUMINE**
KOLLOIDALE ALUMINOUMOXIDDISPERSION
COLLOIDAL DISPERSION OF ALUMINIUM OXIDE

(30) Priorité: 03.12.2009 FR 0905838
(43) Date de publication de la demande: 10.10.2012
(73) Titulaire: Commissariat à l'Énergie Atomique et aux Énergies Alternatives, 75015 Paris (FR)
(72) Inventeur: PONCELET, Olivier, F-38000 Grenoble (FR); BONNEAU, Lionel, F-74960 Cran Gevrier (FR); GETTO, Daniel, F-38120 Le Fontanil (FR); TARDIF, François, F-38250 Lans En Vercors (FR)
(74) Mandataire: Gevers & Orès
(86) Numéro de dépôt international: PCT/FR2010/000796
(87) Numéro de publication internationale: WO 2011/067482

(56) Documents cités:
- US-A1- 2008 212 733
- TIMOFEEVA ELENA ET AL: "Particle shape effects on thermophysical properties of alumina nanofluids", JOURNAL OF APPLIED PHYSICS, AMERICAN INSTITUTE OF PHYSICS. NEW YORK, US LNKD- DOI:10.1063/1.3155999, vol. 106, no. 1, 6 juillet 2009 (2009-07-06), pages 14304-14304, XP012123462, ISSN: 0021-8979 cité dans la demande
- YU W ET AL: "Review and compairison of nanofluid thermal conductivity and heat transfer enhancements", HEAT TRANSFER ENGINEERING, HEMISPHERE PUB, WASHINGTON, DC, US LNKD- DOI:10.1080/01457630701850851, vol. 29, no. 5, 1 mai 2008 (2008-05-01), pages 432-460, XP008123898, ISSN: 0145-7632 cité dans la demande
- VASU V ET AL: "Thermal design analysis ofcompact heat exchanger using nanofuids", INTERNATIONAL JOURNAL OF NANOMANUFACTURING, INDERSCIENCE PUBLISHERS, GB LNKD- DOI:10.1504/IJNM.2008.018949, vol. 2, no. 3, 1 janvier 2008 (2008-01-01) , pages 271-288, XP008096374, ISSN: 1746-9392

## Description

L'invention concerne un fluide caloporteur et son utilisation.

Les fluides caloporteurs sont destinés à refroidir de nombreux dispositifs soumis à des températures qui sont estimées trop élevées pour le bon fonctionnement du dispositif.

Par exemple, ils sont utilisés pour le refroidissement des microprocesseurs, de l'électronique embarquée, des moteurs thermiques ou électriques.

Ils sont également utilisés dans le refroidissement des réacteurs nucléaires.

L'eau est un des meilleurs fluides connus en tant que fluide caloporteur.

Il peut cependant lui être ajouté des additifs, tels que l'éthylène glycol ou le propylène glycol, qui l'empêchent de geler à de trop faibles températures.

Mais, partout où des gains de poids sont attendus, le fait de pouvoir utiliser une moins grande quantité de fluide caloporteur (eau, eau+éthylène glycol) pour des propriétés d'échange thermique identiques, voire supérieures, est d'un grand intérêt.

Ainsi, il est nécessaire d'augmenter la conductivité thermique du fluide caloporteur. Il a été démontré récemment que l'addition de nanoparticules dans un fluide caloporteur augmentait de manière importante la conductivité thermique du fluide caloporteur. Ces nouveaux fluides caloporteurs prennent le nom de nanofluides (CHOI (S.) - Enhancing Thermal Conductivity of Fluids with Nanoparticles. - The American Society of Mechanical Engineers, New-York, vol. 231/MD-vol. 66:99-105, nov. 1995. ou YU (W.) - FRANCE (D.) - ROUTBORT (J.) - CHOI (S.) - Review and Comparison of Nanofluid Thermal Conductivity and Heat Transfer Enhancements. - Heat Transfer Engineering, vol. 29, p. 432-460 (2008) ou DAS (S.) - CHOI (S.) - YU (W.) - PRADEEP (T.) - Nanofluids : Science and Technology. - J. Wiley (2008)).

L'addition de divers types de nanoparticules à un fluide pour en augmenter les propriétés thermiques a été largement étudiée, et il apparaît qu'à l'heure actuelle, il n'est pas nécessaire que les nanoparticules utilisées soient, par nature, constituées d'un matériau bon conducteur thermique, tel qu'un métal, et que des performances honorables peuvent être obtenues avec des matériaux thermiquement nettement moins performants, tel que les argiles ou les oxydes : l'halloysite, la laponite, la silice (SiO₂), l'oxyde de zinc (ZnO), l'alumine (Al₂O₃) citée, par exemple, dans la demande de brevet US 2008/212733 A1, ces derniers étant des produits disponibles industriellement. Des paramètres tels que la robustesse, c'est-à-dire la stabilité au cours du temps du nanofluide en usage, et le bilan énergétique total, c'est-à-dire le compromis entre l'augmentation de la conductivité thermique par rapport à l'augmentation de la viscosité du fluide, peuvent être évalués.

A titre de comparaison, en écoulement laminaire, on considère que le bilan énergétique global est positif quand l'augmentation de viscosité est inférieure à 5 fois l'augmentation de la conductivité thermique.

En effet, une augmentation de viscosité trop importante entraîne la nécessité d'augmenter la puissance du groupe de pompage, ce qui a pour effet d'annuler tout, ou une grande partie, du bénéfice obtenu par l'augmentation de conductivité thermique.

Plus particulièrement, l'alumine γ-Al₂O₃ et α-Al₂O₃ et ses dérivés hydratés (Al(OH)₃, AlOOH), quant à leur disponibilité industrielle, leur très faible toxicité et la possiblité d'obtenir des nanoparticules sous de nombreuses formes a été plus particulièrement étudiée, car sa conductivité thermique est bonne pour un matériau de type oxyde (40 m⁻¹K⁻¹, pour α-Al₂O₃).

Pour les formes hydratées de l'alumine, cette conductivité thermique est beaucoup plus faible.

L'influence de la forme et de la taille des particules d'alumine sur l'amélioration de la conductivité thermique de l'eau a été étudiée en particulier par Timofeeva et al., dans "Particle shape effects on thermophysical properties of alumina nanofluids", Journal of Applied Physics 106, 014304 (2009).

Les conclusions de cet article sont que les particules d'alumine en forme de plaquette mènent à l'augmentation la plus faible de la conductivité thermique du fluide caloporteur dans lequel l'alumine est intégrée, par rapport à de l'alumine en forme de lame, de brique ou de cylindre et que de plus l'alumine en forme de plaquettes est l'alumine qui augmente le plus la viscosité du fluide caloporteur dans lequel elle est intégrée, toujours par rapport à des alumines chimiquement équivalentes ayant la forme de lame, de brique ou de cylindre.

Ainsi, parmi les nanoparticules d'alumine qui peuvent être utilisées en tant qu'additif dans un fluide caloporteur, celles ayant une forme de plaquette, c'est-à-dire dont la dimension la plus faible est l'épaisseur, sont celles qui sont les moins adaptées car à pourcentage massique équivalent dans le fluide caloporteur, ce sont celles qui présentent la plus faible capacité à augmenter la conductivité thermique du fluide mais qui, par contre, en augmentent fortement la viscosité.

Or, allant à l'encontre de cet état de l'art, l'invention propose un fluide caloporteur comprenant de telles particules d'alumine en forme de plaquettes.

Ainsi, l'invention propose un fluide caloporteur caractérisé en ce qu'il est constitué d'un sol colloïdal aqueux comprenant :
1) de l'eau, et
2) jusqu'à 58,8% en masse, par rapport à la masse totale du fluide, de particules d'α-Al₂O₃ dont :
   - l'épaisseur est la plus petite dimension et est inférieure ou égale à 30 nm, de préférence entre 15 et 25 nm.
   - 90 à 95% en nombre de ces particules ont une taille inférieure ou égale à 210 nm, parmi lesquelles 50% en nombre ont une taille inférieure ou égale à 160 nm.

De plus, de préférence, 10% en nombre, de ces 90 à 95% en nombre de particules, ont une taille inférieure ou égale à 130 nm.

De préférence, le fluide de l'invention possède une viscosité inférieure à 10 Cp, plus préférentiellement inférieure à 5 Cp, tout en étant supérieure à 1,1 Cp.

De préférence, le fluide de l'invention comprend uniquement lesdites particules d'α-Al₂O₃ et de l'eau.

Dans ce cas, de préférence, le fluide a une densité comprise entre 1,650 et 1,770, plus préférablement de 1,748.

Le fluide caloporteur selon l'invention est particulièrement approprié en tant que fluide pour le refroidissement de secours de réacteurs nucléaires.

L'invention sera mieux comprisse et d'autres caractéristiques et avantages de celle-ci apparaîtront plus clairement à la lecture de la description explicative qui suit et qui est faite en référence à la figure unique annexée qui montre les courbes d'augmentation de la conductivité thermique K (par rapport à K₀, conductivité thermique de l'eau pure) de différents fluides caloporteurs comprenant des particules d'alumine α de formes différentes, en fonction de la concentration massique de ces particules d'alumine dans le sol aqueux.

L'invention est basée sur la découverte qu'un fluide caloporteur comprenant de l'eau et des particules d'alumine α (α-Al₂O₃) ayant la forme de plaquettes et ayant une distribution de la taille des particules très précise ont des propriétés d'amélioration de la conductivité thermique supérieures à tout autre forme de particules d'alumine et de distribution de taille.

La taille des particules est mesurée par diffusion différentielle de la lumière (dls).

Ainsi, les particules d'alumine utilisées dans l'invention sont des particules en forme de plaquettes, c'est-à-dire ont la forme de particules plates dont l'épaisseur est la plus petite dimension et est inférieure ou égale à 30 nm de préférence entre 15 et 25 nm et qui ont une répartition de taille précise :
- 90 à 95% en nombre des particules ont une taille inférieure ou égale à 210 nm,
- 50% en nombre de ces 90 à 95% de particules ont une taille inférieure ou égale à 160 nm. De préférence, de plus, 10%, en nombre de ces 90 à 95% de particules ont une taille inférieure ou égale à 130 nm.

Outre cette distribution granulométrique particulière, les nanoparticules utilisées dans l'invention ont une taille comprise entre 300 et 60 nm.

Par taille, on entend la plus grande dimension de ces nanoparticules, et typiquement, leur diamètre moyen. Cette taille est mesurée par microscopie à transmission.

Un tel fluide caloporteur est aisément réalisé par mélange des nanoparticules d'alumine dans de l'eau, selon des techniques connues de l'homme du métier.

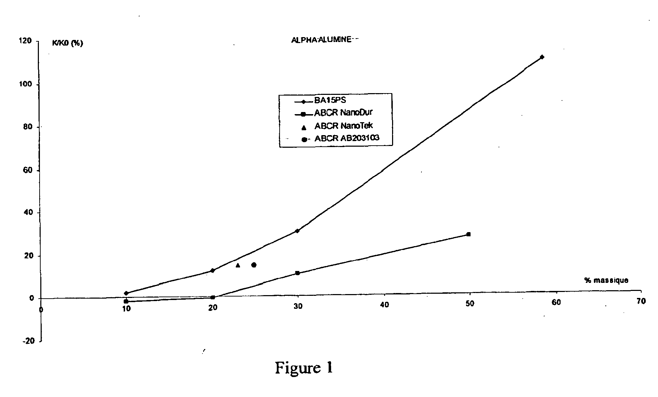

Comme on le voit en figure 1, qui représente l'augmentation de la conductivité thermique K d'un fluide constitué d'eau et de particules d'alumine par rapport à la conductivité thermique Ko de l'eau seule, en fonction de la concentration massique en nanoparticules de dispersions colloïdales d'oxyde d'alumine de différentes formes, à toutes les concentrations, c'est la dispersion colloïdale d'alumine notée BA15PS^{®} commercialisée par la société BAIKOWSKI qui montre la meilleure augmentation de conductivité. En particulier, à une concentration de 50% massique en alumine, par rapport au poids total du fluide caloporteur constitué d'eau et d'alumine, pour la dispersion colloïdale de nanoparticules d'alumine BA15PS^{®}, on obtient une augmentation de la conductivité thermique de 86% alors que pour une même concentration massique, la dispersion colloïdale de nanoparticules d'alumine NanoDur^{®} X1121W commercialisé par Alfa Aesar ne montre qu'une augmentation de conductivité thermique de 25 %.

Les dispersions colloïdales d'alumines NanoDur^{®} X1121W et NanoTek^{®} Al-6021 commercialisées par Alfa Aesar montrent une augmentation de la conductivité thermique asymptotique à partir d'une concentration massique à 20%.

Les nanoparticules d'alumine entrant dans la composition de ces sols colloïdaux aqueux sont toutes des alumines α cristallisées.

Elles présentent des morphologies différentes.

Elles ne contiennent pas de phases parasites (principalement AlOOH et γ-Al₂O₃).

Les domaines de taille sont comparables mais l'alumine BA15PS^{®} est moins polydisperse en tailles.

La morphologie des dispersions colloïdales d'alumines NanoDur^{®} X1121W et NanoTek^{®} Al-6021 est sphérique alors que l'alumine BA15PS^{®} est elle une alumine α, cristallisée ne contenant pas de phases parasites, en forme de plaquettes dont la distribution de taille est telle que 90 à 95% des nanoparticules présentent une taille inférieure ou égale à 210 nm, et que parmi 90 à 95% de nanoparticules, 50% ont une taille inférieure ou égale à 160 nm et seulement 10% de ces 90 à 95 de nanoparticules ont une taille inférieure ou égale à 130 nm.

De plus, la viscosité du fluide caloporteur est la moins augmentée avec ce type d'alumine, comme le montre le tableau suivant.

| Echantillons | Viscosité (Cp) |
|---|---|
| Sol colloïdal aqueux BA15PS^{®} à 58,8% massique en alumine | 4,0 Cp |
| Sol colloïdal aqueux NanoDur^{®} X1121W à 53,3% massique en alumine | 40,1 Cp |

Les mesures ont été effectuées sur un viscosimètre Brookfield, l'eau mesurée comme référence à 25°C donnait une valeur de 1,05 Cp à la place de 1Cp théorique.

Ainsi, une concentration de jusqu'à 58,8% en masse de nanoparticules d'α-alumine, telles que définies dans l'invention, peut être ajoutée dans le fluide caloporteur.

A ces concentrations, le fluide caloporteur reste un sol colloïdal aqueux stable, c'est-à-dire qu'aucun phénomène de décantation n'est observé.

L'homme de l'art pourra bien entendu diluer ce sol colloïdal, si besoin est, en fonction du niveau de conductivité thermique recherché et qui peut être déterminé grâce à la courbe de la figure 1.

Les nanoparticules d'alumine utilisées dans l'invention doivent avoir la forme de plaquettes et peuvent présenter des formes très différentes, en V, en Y, voire même en X.

Pour encore mieux définir l'alumine utilisée dans l'invention, on ajoutera que ces particules d'alumine sont constituées à 100% d'alumine α ayant un point de fusion de 2045°C, un point d'ébullition de 2980°C et une densité de 3,965, ce qui fait que le meilleur fluide caloporteur selon l'invention qui contient 58,8% de la masse, par rapport à la masse totale du fluide caloporteur, de tels alumines, à une densité, lorsque le fluide caloporteur est l'eau, qui doit être comprise entre 1,650 et 1,760. Le plus préférablement, la densité est de 1,748.

Les excellentes performances thermiques du fluide caloporteur de l'invention ont cependant une contre partie : ils sont très abrasifs.

Dès lors, ils sont à utiliser, le plus préférablement, dans des circuits de refroidissement qui ne sont pas destinés à avoir une longue durée de vie.

Parmi ces circuits, le circuit de refroidissement de secours de réacteurs nucléaires est particulièrement approprié.

En effet, dans le circuit de refroidissement de secours de réacteurs nucléaires, il est question de pouvoir refroidir très vite le coeur du réacteur en cas de surchauffe accidentelle.

Ainsi, dans cette application, où il ne sera pas question de redémarrer la centrale, le caractère abrasif du fluide caloporteur de l'invention n'est pas important car ce qui compte est sa capacité à disperser le plus de chaleur possible avec le moins de matière possible.

Le but du fluide caloporteur de l'invention est d'éviter la fusion des barreaux de combustibles et la dissémination de matières radioactives.

Le fluide caloporteur de l'invention est donc parfaitement approprié à ce type d'utilisation.

## Revendications

1. Fluide caloporteur **caractérisé en ce qu'**il est constitué d'un sol colloïdal aqueux comprenant :
1) de l'eau, et
2) jusqu'à 58,8% en masse, par rapport à la masse totale du fluide, de particules d'α-Al₂O₃ dont :
- l'épaisseur est la plus petite dimension et est inférieure ou égale à 30 nm,
- 90 à 95% en nombre de ces particules ont une taille inférieure ou égale à 210 nm, parmi lesquelles 50% en nombre ont une taille inférieure ou égale à 160 nm.

2. Fluide selon la revendication 1 **caractérisé en ce que** , de plus, 10% en nombre des 90 à 95% en nombre de particules ayant une taille inférieure ou égale à 210 nm, ont une taille inférieure ou égale à 130 nm.

3. Fluide selon la revendication 1, **caractérisé en ce qu'**il comprend uniquement lesdites particules d'α-Al₂O₃ et de l'eau.

4. Fluide selon la revendication 1 ou 2, **caractérisé en ce qu'**il a une densité comprise entre 1,650 et 1,770.

5. Fluide selon l'une quelconque des revendications précédentes, **caractérisé en ce qu'**il a une densité égale à 1,748.

6. Fluide selon une quelconque des revendications précédentes, **caractérisé en ce qu'**il a une viscosité inférieure à 10Cp, préférentiellement inférieure à 5Cp.

7. Utilisation du fluide caloporteur selon l'une quelconque des revendications précédentes pour le refroidissement de secours de réacteurs nucléaires.

## Patentansprüche

1. Wärmeübertragungsfluid, **dadurch gekennzeichnet, dass** es aus einem wässrigen kolloidalen Sol gebildet ist, das Folgendes umfasst:
1) Wasser, und
2) bis zu 58,8 Ma% α-Al₂O₃-Teilchen im Verhältnis zur Gesamtmasse des Fluides, wobei:
- die Dicke die kleinste Abmessung ist und kleiner oder gleich 30 nm ist,
- 90 bis 95% der Anzahl dieser Teilchen eine Größe aufweisen, die kleiner oder gleich 210 nm ist, wovon 50% ihrer Anzahl eine Größe aufweisen, die kleiner oder gleich 160 nm ist.

2. Fluid nach Anspruch 1, **dadurch gekennzeichnet, dass** ferner 10% der Anzahl der 90 bis 95% der Anzahl der Teilchen, die eine Größe aufweisen, die kleiner oder gleich 210 nm ist, eine Größe aufweisen, die kleiner oder gleich 130 nm ist.

3. Fluid nach Anspruch 1, **dadurch gekennzeichnet, dass** es einzig α-Al₂O₃-Teilchen und Wasser umfasst.

4. Fluid nach Anspruch 1 oder 2, **dadurch gekennzeichnet, dass** es eine Dichte aufweist, die zwischen 1,650 und 1,770 enthalten ist.

5. Fluid nach einem der vorhergehenden Ansprüche, **dadurch gekennzeichnet, dass** es eine Dichte aufweist, die gleich 1,748 ist.

6. Fluid nach einem der vorhergehenden Ansprüche, **dadurch gekennzeichnet, dass** es eine Viskosität aufweist, die kleiner als 10 cP, vorzugsweise kleiner als 5 cP, ist.

7. Verwendung des Wärmeübertragungsfluides nach einem der vorhergehenden Ansprüche zur Notkühlung von Kernreaktoren.

## Claims

1. A heat transfer fluid **characterized in that** it consists of an aqueous colloidal sol comprising:
1) water, and
2) up to 58.8% by mass, based on the total mass of the fluid, of α-Al₂O₃ particles, for which:
- the thickness is the smallest dimension and is less than or equal to 30 nm,
- 90 to 95% by number of these particles has a size of less than or equal to 210 nm, among which 50% by number have a size of less than or equal to 160 nm.

2. The fluid according to claim 1, **characterized in that**, further, 10% by number of the 90 to 95% by number of particles having a size of less than or equal to 210 nm, have a size of less than or equal to 130 nm.

3. The fluid according to claim 1, **characterized in that** it exclusively comprises said α-Al₂O₃ particles and water.

4. The fluid according to claim 1 or 2, **characterized in that** it has a density comprised between 1.650 and 1.770.

5. The fluid according to any of the preceding claims, **characterized in that** it has a density equal to 1.748.

6. The fluid according to any of the preceding claims, **characterized in that** it has a viscosity of less than 10 cP, preferentially less than 5 cP.

7. The use of a heat transfer fluid according to any of the preceding claims for emergency cooling of nuclear reactors.
